# EUROPÄISCHE PATENTANMELDUNG

(11) **EP 3 156 735 A1**
(43) Veröffentlichungstag der Anmeldung: **19.04.2017**
(21) Anmeldenummer: 16193769.3
(22) Anmeldetag: 13.10.2016
(51) Int. Cl.: F24F 3/044, B29C 49/00, F24F 3/14

(54) **LUFTENTFEUCHTUNGSANLAGE**

(30) Priorität: 13.10.2015 AT 508692015
(71) Anmelder: Blue Air Systems GmbH, 6250 Kundl (AT)
(72) Erfinder: Auer, Bernhard, 6250 Kundl (AT)
(74) Vertreter: Schwarz & Partner Patentanwälte OG

(57) **Zusammenfassung**

Vorrichtung (50) zur thermischen Bearbeitung von Kunststoffen, umfassend eine Luftentfeuchtungsanlage (20) und ein thermisch beheizbares Werkzeug (52), welches von einem Werkzeugraum (54) umgeben ist, dadurch gekennzeichnet, dass der Luftauslass (14) der Luftentfeuchtungsanlage (20) und der Lufteinlass (12) der Luftentfeuchtungsanlage (20) jeweils mit dem Werkzeugraum (54) verbunden sind, wobei die Luftentfeuchtungsanlage (20) zumindest zwei Wärmetauscher (1, 2, 3, 4) aufweist, welche einen gemeinsamen Kühlmittelkreislauf (10) aufweisen, wobei der erste Wärmetauscher (1) und der zweite Wärmetauscher (3) hintereinander angeordnet sind, sodass der Lufteinlass (12) am ersten Wärmetauscher (1) angeordnet ist und der Luftauslass (14) nach dem zweiten Wärmetauscher (3) angeordnet ist, wobei der erste Wärmetauscher (1) einen Verdampfungswärmetauscher aufweist und der zweite Wärmetauscher (3) einen Kondensationswärmetauscher aufweist, wobei der Kühlmittelkreislauf (10) derart ist, dass der Kühlmittelauslass (1.2) des ersten Wärmetauschers (1) in einen Einlass (6.1) eines Verdichters (6) mündet, wobei der Auslass (6.2) des Verdichters (6) in den Kühlmitteleinlass (3.1) des zweiten Wärmetauschers (3) mündet, wobei der Kühlmittelauslass (3.2) des zweiten Wärmetauschers (3) in den Kühlmitteleinlass (1.1) des ersten Wärmetauschers (1) mündet.

## Beschreibung

Die Erfindung betrifft eine Vorrichtung zur thermischen Bearbeitung von Kunststoffen, umfassend eine Luftentfeuchtungsanlage und ein thermisch beheizbares Werkzeug, welches von einem Werkzeugraum umgeben ist, wobei der Luftauslass der Luftentfeuchtungsanlage mit dem Werkzeugraum verbunden ist. Weiters betrifft die Erfindung eine Luftentfeuchtungsanlage.

Bei der thermischen Verarbeitung von thermoplastischen Kunststoffen wie zum Beispiel beim Spritzguss, Extrusionsblasen, Extrudieren oder Tiefziehen besteht das grundsätzliche technische Problem, dass die fertigen Kunststoffteile und die entsprechenden Werkzeuge sehr hohe Temperaturen aufweisen und danach schnell wieder abgekühlt werden müssen. Im Fall der Herstellung von Flaschen aus Polyethylenterephthalat (PET) treten Temperaturen von rund 220°C auf. Fällt die Oberflächentemperatur beim Abkühlen unterhalb des Taupunktes der Umgebungstemperatur, entsteht am Kunststoffprodukt und am Werkzeug der Vorrichtung zur thermischen Bearbeitung von Kunststoffen Kondensat.

Beim Stand der Technik wird Umgebungsluft von einer Luftentfeuchtungsanlage angesaugt, in einem Filter gefiltert, gekühlt, anschließend wieder erwärmt und schließlich als trockene Prozessluft in den Werkzeugraum eingeblasen. Die vom Filter gereinigte Umgebungsluft wird durch Wärmetauscher gekühlt. Das anfallende Kondenswasser wird aufgefangen und abgeführt. Zur Luftentfeuchtung werden hauptsächlich Adsorptionstrockner (bestückt mit Silicagel oder nach dem Prinzip eines Trockenradtrockners) eingesetzt.

Zur Vermeidung des Kondensats wird beim Stand der Technik unter anderem die Kühlwassertemperatur angehoben. Dies verlängert allerdings die Kühlzeit und reduziert die Produktivität bei der Produktion. Eine Erhöhung der Kühlwassertemperatur um 1 °C bewirkt eine Verringerung von ca. 1% in der Produktion. Da solche Kunststoffprodukte in sehr hohen Stückzahlen produziert werden, sind der Ausschuss und der wirtschaftliche Ausfall bei dieser Vorgehensweise daher sehr groß.

Es ist daher aus dem Stand der Technik bekannt, den Werkzeugraum mit trockener Prozessluft zu versorgen, was den Taupunkt senkt und somit aufgrund von wesentlich kürzeren Kühlungszeiten die Produktivität von kunststoffverarbeitenden Maschinen erhöht. Dazu wird eine Abdeckung über dem Werkzeugraum angebracht, um die trockene Luft in der kunststoffverarbeitenden Maschine zu halten.

Nachteilig am Stand der Technik ist der Umstand, dass der Energiebedarf für derartige Kühleinrichtungen sehr hoch ist.

Aufgabe der vorliegenden Erfindung ist es daher, eine Vorrichtung und eine Luftentfeuchtungsanlage der eingangs genannten Art bereit zu stellen, bei der der Energiebedarf für die Kühlung reduziert ist.

Gelöst wird diese Aufgabe durch eine Vorrichtung zur thermischen Bearbeitung von Kunststoffen, umfassend eine Luftentfeuchtungsanlage und ein thermisch beheizbares Werkzeug, welches von einem Werkzeugraum umgeben ist, dadurch gekennzeichnet, dass der Luftauslass der Luftentfeuchtungsanlage und der Lufteinlass der Luftentfeuchtungsanlage jeweils mit dem Werkzeugraum verbunden sind, wobei die Luftentfeuchtungsanlage zumindest zwei Wärmetauscher aufweist, welche einen gemeinsamen Kühlmittelkreislauf aufweisen, wobei der erste Wärmetauscher und der zweite Wärmetauscher hintereinander angeordnet sind, sodass der Lufteinlass am ersten Wärmetauscher angeordnet ist und der Luftauslass nach dem zweiten Wärmetauscher angeordnet ist, wobei der erste Wärmetauscher einen Verdampfungswärmetauscher aufweist und der zweite Wärmetauscher einen Kondensationswärmetauscher aufweist, wobei der Kühlmittelkreislauf derart ist, dass der Kühlmittelauslass des ersten Wärmetauschers in einen Einlass eines Verdichters mündet, wobei der Auslass des Verdichters in den Kühlmitteleinlass des zweiten Wärmetauschers mündet, wobei der Kühlmittelauslass des zweiten Wärmetauschers in den Kühlmitteleinlass des ersten Wärmetauschers mündet.

Durch die spezielle Art und Anordnung der Wärmetauscher sowie die geschlossene Führung, d.h. Wiederverwertung der Kühlluft über die Fluidleitungen, wird der Energieverbrauch für denselben Grad der Kühlung von Werkzeug und Kunststoffteil signifikant reduziert bzw. kann die Kondensatbildung und der Kunststoffteilausschuss reduziert werden.

Beispielsweise kann die Vorrichtung zur thermischen Bearbeitung von Kunststoffen ausgewählt sein aus der Gruppe Spritzgießmaschine, (Co-)Extrusionsvorrichtung, Kunststoffplastifiziereinheit, Extrusionsblasvorrichtung, Kunststoffmaschine oder Tiefziehmaschiene.

Die Aufgabe wird außerdem gelöst durch eine Luftentfeuchtungsanlage, umfassend zumindest zwei Wärmetauscher, welche einen gemeinsamen Kühlmittelkreislauf aufweisen, wobei der erste Wärmetauscher und der zweite Wärmetauscher hintereinander angeordnet sind, sodass der Lufteinlass am ersten Wärmetauscher angeordnet ist und der Luftauslass nach dem zweiten Wärmetauscher angeordnet ist, wobei der erste Wärmetauscher einen Verdampfungswärmetauscher aufweist und der zweite Wärmetauscher einen Kondensationswärmetauscher aufweist, wobei der Kühlmittelkreislauf derart ist, dass der Kühlmittelauslass des ersten Wärmetauschers in einen Einlass eines Verdichters mündet, wobei der Auslass des Verdichters in den Kühlmitteleinlass des zweiten Wärmetauschers mündet, wobei der Kühlmittelauslass des zweiten Wärmetauschers in den Kühlmitteleinlass des ersten Wärmetauschers mündet.

Nachfolgend werden vorteilhafte Ausführungsvarianten beschrieben, die sowohl für die Vorrichtung zur thermischen Bearbeitung von Kunststoffen als auch für die Luftentfeuchtungsanlage gelten.

Besonders bevorzugt ist ein dritter Wärmetauscher vorgesehen, welcher zwischen dem ersten Wärmetauscher und dem zweiten Wärmetauscher angeordnet ist, sodass durch den Lufteinlass eintretende Luft durch den ersten Wärmetauscher, den dritten Wärmetauscher und anschließend durch den zweiten Wärmetauscher strömt, bzw. sodass erster Wärmetauscher, dritter Wärmetauscher und zweiter Wärmetauscher jeweils hintereinander angeordnet sind, wobei der dritte Wärmetauscher einen Verdampfungswärmetauscher aufweist, wobei der Kühlmittelkreislauf derart ist, dass der Kühlmittelauslass des dritten Wärmetauschers ebenfalls in den Einlass des Verdichters mündet. Alle drei Wärmetauscher haben somit einen gemeinsamen Kühlmittelkreislauf. Diese Ausführungsvariante ist besonders energiearm zu betreiben.

Weiters kann in einer Ausführungsvariante ein vierter Wärmetauscher vorgesehen sein, wobei der Kühlmittelkreislauf derart ist, dass der Auslass des Verdichters in den Kühlmitteleinlass des vierten Wärmetauschers mündet, wobei der Kühlmittelauslass des vierten Wärmetauschers in den Kühlmitteleinlass des zweiten Wärmetauschers mündet, wobei der Kühlmittelauslass des zweiten Wärmetauschers in den Kühlmitteleinlass des ersten Wärmetauschers und, falls ein dritter Wärmetauscher vorhanden ist, in den Kühlmitteleinlass des zweiten Wärmetauschers mündet. Auch in diesem Fall ist für alle Wärmetauscher ein gemeinsamer Kühlmittelkreislauf vorgesehen. Der Energieverbrauch kann damit auf ein Minimum reduziert werden.

Der vierte Wärmetauscher kann unterschiedlich ausgebildet sein. Beispielsweise kann vorgesehen sein, dass der vierte Wärmetauscher ein Kondensationswärmetauscher ist. Alternativ dazu kann z.B. vorgesehen sein, dass der vierte Wärmetauscher einen wassergekühlten Kondensator aufweist.

Weiters kann vorgesehen sein, dass vor dem zweiten Wärmetauscher ein Lüfter angeordnet ist. In Fall eines dritten Wärmetauschers ist der Lüfter bevorzugt nach dem dritten Wärmetauscher aber vor dem zweiten Wärmetauscher angeordnet. Damit ist es möglich, Kühlluft für andere Verbraucher abzuzweigen.

Als Kühlmittel kommen herkömmliche Kühlmittel in Frage. Ein mögliches Kühlmittel für den Kühlmittelkreislauf ist z.B. R404A. Bei R404A handelt es sich um eine Mischung aus 1,1,1 -Trifluorethan, Pentafluroethan und 1,1,1,2-Tetrafluroethan.

In allen Ausführungsvarianten ist bevorzugt vorgesehen, dass der erste Wärmetauscher und der dritte Wärmetauscher Verdampfungswärmetauscher sind und der zweite Wärmetauscher ein Kondensationswärmetauscher ist.

Die erfindungsgemäße Vorrichtung (und die Luftentfeuchtungsanlage) kann ohne Kühlwasser betrieben werden. Damit reduziert sich der erhebliche Energieaufwand für solche Anlagen auf bis zu 1/10 von herkömmlichen Anlagen. Dieses Ziel wird dadurch erreicht, dass man die erzeugte trockene Luft mit einem Taupunkt von + 3°C recycelt und der Luftentfeuchtungsanlage wieder zuführt. Die Trocknung dieser wieder zugeführten Luft verbraucht deutlich weniger Energie als würde man feuchtere Außenluft der Anlage zuführen. Die neue Luftentfeuchtungsanlage soll über einen Kältekreislauf mit einem Kompressor betrieben werden. Der Hauptvorteil liegt darin, dass die Kompressor-Leistung stufenlos ist und um bis zu 90 % reduziert werden kann, was bis dato nicht möglich war. Der Energiebedarf der Anlage führt in Kombination mit diesem Kompressor-System zu einem extremen Energieeinsparungspotenzial.

Für einen reibungslosen Produktionsverlauf ist es notwendig, einen konstanten Taupunkt der Luft zu erreichen. Die wiederverwertete Kühlluft kann mit stark schwankendem Feuchtigkeitsgehalt zurück zur Luftentfeuchtungsanlage gelangen. Die Luftentfeuchtungsanlage muss auf diese Schwankungen rasch reagieren und in unterschiedlicher Intensität Leistung bringen. Der Kältekreislauf muss darauf reagieren und unterschiedlich arbeiten. In der Anlage wird dies dadurch realisiert, dass sich der Verdampferdruck, der für die Kondensation am Wärmetauscher verantwortlich ist, permanent an den Feuchtigkeitsgehalt bzw. der Temperatur der Prozessluft anpasst. Dies wird mit Hilfe eines Verdampfer-Drucksensors, eines elektrischen Reglers und eines Magnetventils im Digital-Scroll-Kompressor realisiert.

Um Energie zu sparen, kann zusätzlich eine Steuerung des Prozesslüfters eingebaut werden, welche die Prozessluft bei nicht vorhandenem Bedarf dezimiert und das Energiesparpotenzial zusätzlich verbessert. Die Luft im abgeschotteten Bereich der Anlage wird im Kreis geführt. Wird die Luft nicht vom Außenraum zugeführt sondern recycelt, so ist ein Filter im Prozessluft-Kreislauf integriert, der für die Luftentfeuchtungsanlage eventuell schädliche Dämpfe und Gase aus dem Werkzeugraum ausfiltert bzw. neutralisiert. Bei der Vermischung von Kunststoffdämpfen aus der Produktion mit Kondensat oder Feuchtigkeit, kann Flusssäure entstehen, die die Metalle der Anlage angreifen können. Neben einem Staubfilter, kann ein zusätzlicher sogenannter elektrostatischer Filter hier Abhilfe schaffen und eingebaut werden.

Das Ergebnis der Entwicklungen ist eine kleinere, effizientere Anlage, mit viel geringerem Energieverbrauch als heutzutage handelsüblich erhältlich.

Weitere Details und Vorteile der Erfindung sind nachfolgend anhand der Figuren verdeutlicht.
- Fig. 1: zeigt eine Vorrichtung zur thermischen Bearbeitung von Kunststoffen, umfassend eine Luftentfeuchtungsanlage nach Stand der Technik.
- Fig. 2: zeigt eine Vorrichtung zur thermischen Bearbeitung von Kunststoffen, umfassend eine Luftentfeuchtungsanlage nach der Erfindung.
- Fig. 3a, 3b: zeigen eine weitere Vorrichtung zur thermischen Bearbeitung von Kunststoffen, umfassend eine Luftentfeuchtungsanlage nach der Erfindung.
- Fig. 4 - 7: zeigen Ausführungsvarianten erfindungsgemäßer Luftentfeuchtungsanlagen.

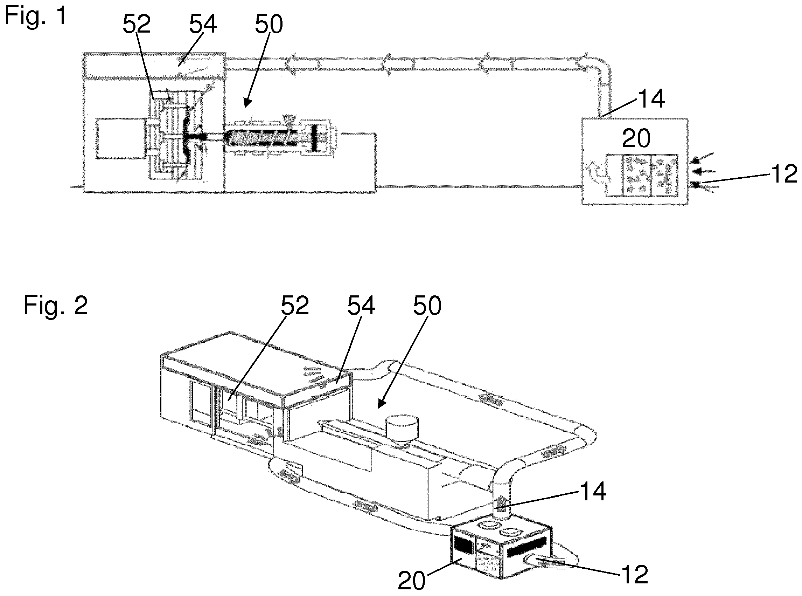

Fig. 1 zeigt eine Vorrichtung 50 zur thermischen Bearbeitung von Kunststoffen in Form einer Spritzgießmaschine nach Stand der Technik. Die Spritzgießmaschine 50 umfasst eine Luftentfeuchtungsanlage 20 und ein thermisch beheizbares Werkzeug 52, welches von einem Werkzeugraum 54 umgeben ist. Die Luftentfeuchtungsanlage 20 weist einen Lufteinlass 12 auf, der Frischluft ansaugt. Der Luftauslass 14 ist mit dem Werkzeugraum 54 verbunden und kühlt dort das Werkzeug 52. Der Energiebedarf einer solchen Vorrichtung 50 zur Kühlung und Entfeuchtung der Frischluft ist sehr hoch.

Wie aus der unten stehenden Tabelle 1 ersichtlich, ist für die Aufbereitung des Kaltwassers im Luft/Wasser Wärmetauscher eine Leistung von ca. 20 kW notwendig. Die erfindungsgemäße Luftentfeuchtungsanlage kann auf diesen Wärmetauscher verzichten und damit drastisch Energie einsparen.

Fig. 2 zeigt eine Vorrichtung 50 zur thermischen Bearbeitung von Kunststoffen in Form einer Spritzgießmaschine gemäß der Erfindung. Die Spritzgießmaschine 50 umfasst eine Luftentfeuchtungsanlage 20 und ein thermisch beheizbares Werkzeug 52, welches von einem Werkzeugraum 54 umgeben ist. Die Luftentfeuchtungsanlage 20 weist einen Lufteinlass 12 und einen Luftauslass 14 auf. Sowohl der Lufteinlass 12 als auch der Luftauslass ist mit dem Werkzeugraum 54 zur Entfeuchtung des Werkzeugs 52 fluidleitend verbunden. Die Kühlluft wird dadurch nach der Kühlung wiederverwertet. Die Pfeile zeigen den Luftverlauf an.

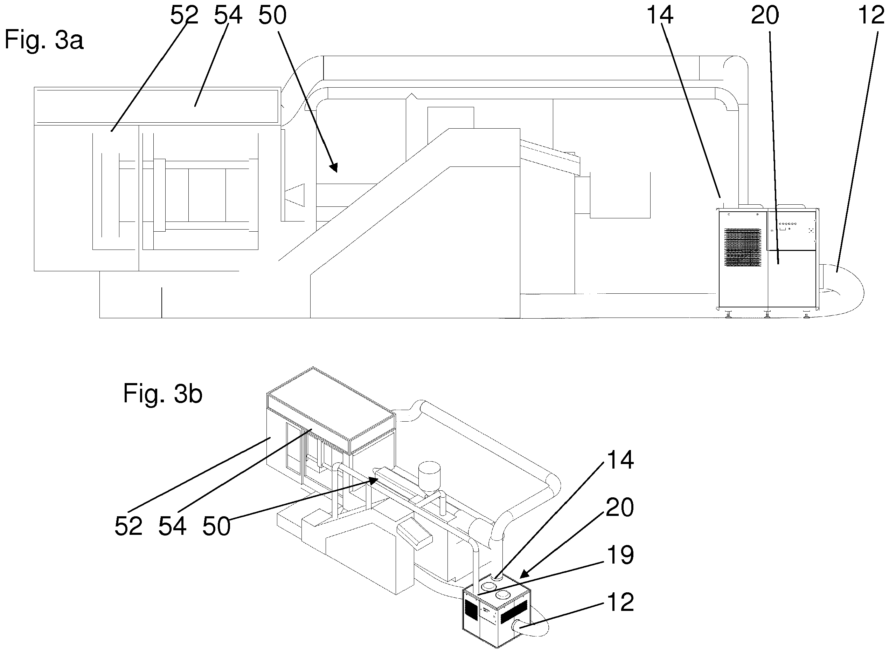

Fig. 3a und 3b zeigen zwei Ansichten einer weiteren erfindungsgemäßen Vorrichtung 50 zur thermischen Behandlung von Kunststoffen in Form einer Spritzgießmaschine. Im Unterschied zum zuvor genannten Beispiel in Fig. 2 weist diese Ausführungsvariante noch eine Ableitung 19 auf, mit der andere Teile an der Vorrichtung 50 gekühlt werden können.

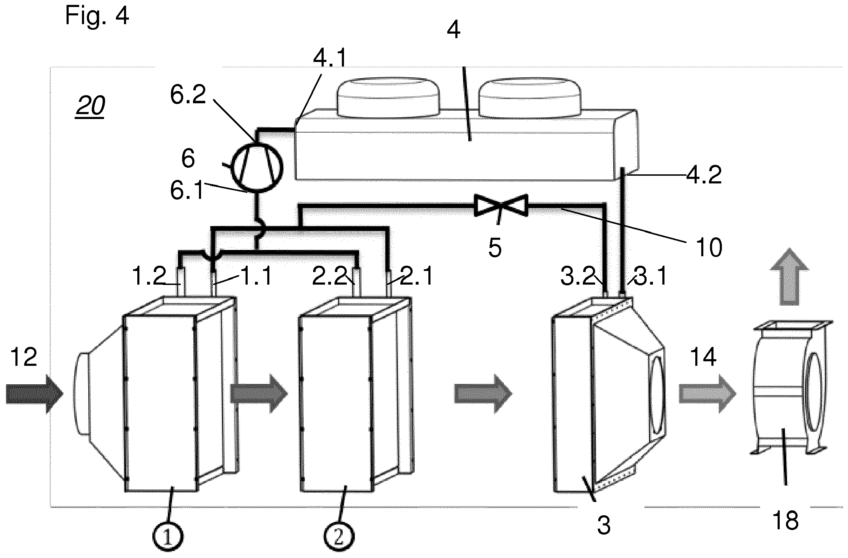

Die Fig. 4 bis 7 zeigen Luftentfeuchtungsanlagen 20 gemäß der Erfindung. Gleiche Bezugszeichen werden in allen Figuren gleichermaßen verwendet, sodass die Fig. 4 bis 7 gemeinsam anhand von Fig. 3 beschrieben werden und nur die Unterschiede in den Fig. 4 bis 7 herausgearbeitet werden.

Die Luftentfeuchtungsanlage 20 umfasst die bevorzugte Ausführungsvariante mit vier Wärmetauscher 1, 2, 3, 4, welche einen gemeinsamen Kühlmittelkreislauf 10 aufweisen. Der erste Wärmetauscher 1, der dritte Wärmetauscher 2 und der zweite Wärmetauscher 3 sind jeweils (linear) hintereinander angeordnet, sodass Luft linear durch die Wärmetauscher 1, 2, 3 durchströmen kann. Der Lufteinlass 12 ist am ersten Wärmetauscher 1 angeordnet und der Luftauslass 14 ist nach dem zweiten Wärmetauscher 3 angeordnet. Kühlluft strömt daher zuerst durch den ersten Wärmetauscher 1, dann durch den dritten Wärmetauscher 2 und danach durch den zweiten Wärmetauscher 3. Der erste Wärmetauscher 1 und der dritte Wärmetauscher 2 sind als Verdampfungswärmetauscher ausgebildet, der zweite Wärmetauscher 3 ist als Kondensationswärmetauscher ausgebildet. Der Kühlmittelkreislauf 10 ist derart ausgebildet, dass der Kühlmittelauslass 1.2 des ersten Wärmetauschers 1 und der Kühlmittelauslass 2.2 des dritten Wärmetauschers 2 in einen Einlass 6.1 eines Verdichters 6 münden.

Der Auslass 6.2 des Verdichters 6 mündet in den Kühlmitteleinlass 4.1 des vierten Wärmetauschers 4. Der Kühlmittelauslass 4.2 des vierten Wärmetauschers 4 mündet in den Kühlmitteleinlass 3.1 des zweiten Wärmetauschers 3. Der Kühlmittelauslass 3.2 des zweiten Wärmetauschers 3 mündet in den Kühlmitteleinlass 1.1 des ersten Wärmetauschers 1 und in den Kühlmitteleinlass 2.1 des dritten Wärmetauschers 2. So wird ein geschlossener Kühlmittelkreislauf gebildet. Nach dem Luftauslass 14 ist ein Prozessluftlüfter 18 vorgesehen, von wo aus die Kühlluft in den Werkzeugraum 54 der Vorrichtung 50 strömt (siehe Fig. 2, 3a, 3b). Das Kühlmittel für den Kühlmittelkreislauf ist R404A.

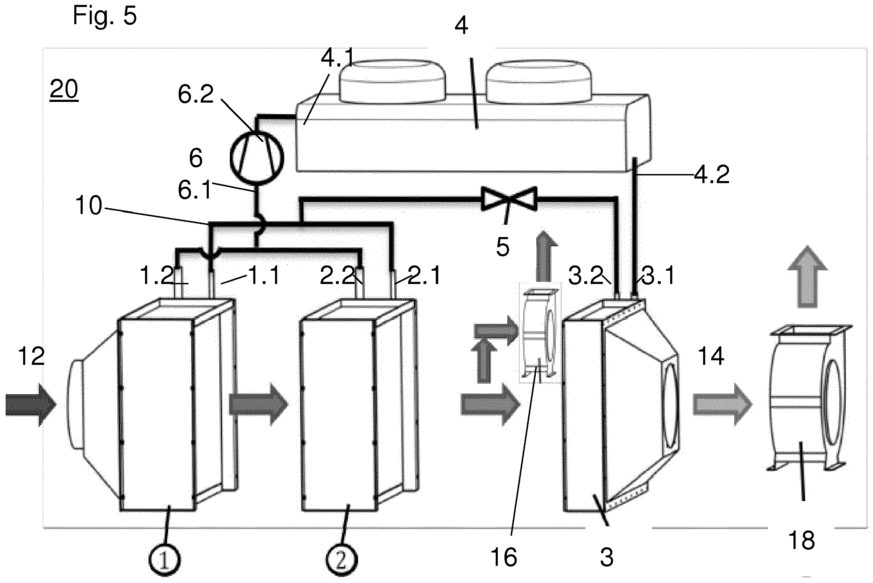

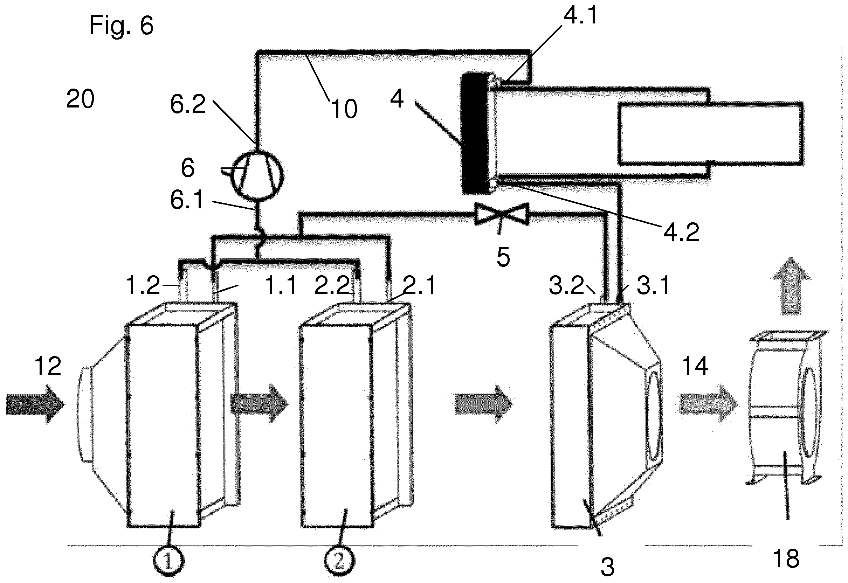

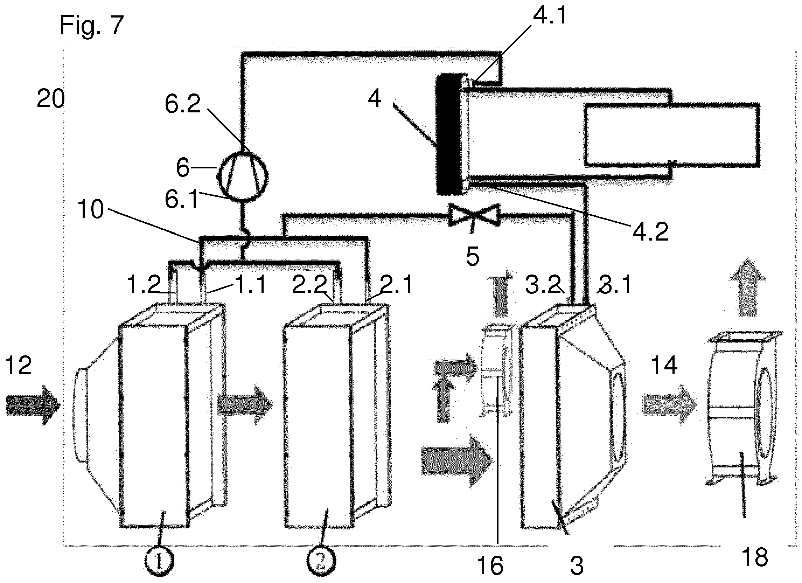

In den Beispielen der Fig. 4 und 5 ist der vierte Wärmetauscher 4 ein Kondensationswärmetauscher mit zwei Lüftern. In den Fig. 6 und 7 ist der vierte Wärmetauscher 4 ein wassergekühlter Kondensator. Die Beispiele der Fig. 4 und 5 bzw. 6 und 7 unterscheiden sich durch den zusätzlichen Prozesslüfter 16.

Der elektrisch betriebene Verdichter 6 verdichtet das gasförmige, kühle Kältemittel (R404A) von Niederdruckniveau (etwa 5 bar) auf Hochdruckniveau (etwa 15 bar). Das heiße, gasförmige Kältemittel wird am vierten Wärmetauscher 4 vorgekühlt. Dieser Luft-Kältemittel-Wärmetauscher wird in Fig. 4 durch zwei drehzahlgesteuerte Lüfter gekühlt. Die Regelung der Kondensator-Lüfter erfolgt über einen Hochdrucksensor. Je nach Hochdruck drehen diese schneller oder langsamer. Der Vorkondensator wird hauptsächlich nur in den ersten paar Minuten verwendet, bis die Abschottung der Produktionsmaschine entfeuchtet ist. Danach reicht der zweite Wärmetauscher 3 aus, um die Last zu bewältigen. Zusätzlich lässt sich über den vierten Wärmetauscher 4 die Austrittsluft regeln bzw. kühlen. Dieser wirkt sich vorteilhaft auf die Energiereduktion aus.

Das Kältemittel R404A fließt anschließend in den Rohrschlangen des zweiten Wärmetauschers 3 (Kondensator) gegen die Luftrichtung, entzieht einen großen Teil der in der Luft enthaltenen Wärme. (Energetisch gesehen wird bei Kondensation Energie frei, welche der vom Verdampfer kommenden kühlen Luft zugeführt wird. Im Klartext: die Luft wird erwärmt). Das nun flüssige Kältemittel strömt zum Expansionsventil 5, welches dieses in die Wärmetauscher (Verdampfer) 1, 2 einspritzt. Diese zwei ähnlichen Wärmetauscher (Verdampfer) 1, 2 werden für die Luftkühlung in der zweiten Kühlstufe eingesetzt. Hier wird Kältemittel (R404a) anstelle von Kaltwasser für die Luftkühlung verwendet. In den Verdampfern 1, 2 wechselt das Kältemittel vom flüssigen in den gasförmigen Aggregatzustand (Kondensation). Dazu wird Energie benötigt, welche der Prozessluft in Form von Temperatur entzogen wird (im Klartext: die Luft wird abgekühlt). Durch die zwei Verdampfer 1, 2 wird die Luft in zwei Stufen abgekühlt. Um das zu realisieren, wird Verdampfer 1 durch ein mechanisches Ventil auf einem etwas wärmeren Temperaturniveau gehalten.

Kondenswasser fällt aus der Luft als Folge der Luftkühlung in allen zwei Stufen an und sammelt sich in einer Kondenswasserwanne. Durch einen Schlauch wird das Kondensat aus der Luftentfeuchtungsanlage 20 geführt und in das Abwassersystem geleitet.

Das nun kühle und auf ein niedriges Druckniveau gebrachte Kältemittel wird nun vom Kompressor angesaugt, wieder verdichtet und erhitzt und auf ein höheres Druckniveau gebracht, um somit den Kältekreis wieder zu schließen. Ein Hoch- und Niederdruckschalter überwacht die Betriebsdrücke des Kältemittels und schaltet den Kompressor aus, wenn das Kälteaggregat aus dem normalen Betriebsbereich fährt. Ein Niederdruckmanometer und ein Hochdruckmanometer zeigen die Betriebsdrücke an. Nach der dritten Kühlstufe 2 wird die Prozessluft mit einer Temperatur von ca. 3 °C zum Kondensator geleitet. Dort gewinnt die Prozessluft Wärme aus dem Kältemittel. Mit einem starken Gebläse 18 wird die Prozessluft angesaugt und durch ein Luftkanalsystem zum Werkzeugraum 52 befördert. Ein Temperaturmessgerät kann eingebaut sein, um die Temperatur der Prozessluft und des Kältemittels anzuzeigen. Signallampen sind neben dem Temperaturmessgerät vorgesehen, um die Einstellung der Regelorgane und die Überwachung des Betriebszustandes zu erleichtern.

Im Gerät ist eine Kondensatpumpe eingebaut. Dabei überwacht der Schwimmerschalter das Wasserniveau in der Kondenswasserwanne und schaltet bei Bedarf die Kondenswasserpumpe ein. Ein Kondenswasserfilter kann die Pumpe vor Schmutzpartikeln schützen.

Anstatt den vierten Wärmetauschers 4 als Vorkondensator auszugestalten, kann ein Kältemittel-Wasserwärmetauscher verwendet werden (Fig. 6 und 7). Dieser wird über ein Wasserventil gesteuert und hat dieselben positiven Eigenschaften wie der Luftwärmetauscher (Prozesslufttemperatur-Regelung). Die Baugröße der Luftentfeuchtungsanlage 20 kann nebenbei auch viel kleiner ausfallen. Das Kühlwasser kann um ein vielfaches wärmer sein als das Kühlwasser, das zur Kühlung der Form verwendet wird und ist somit für den Kunden erheblich günstiger (Tower-Water anstatt Chiller-Water bzw. Verdunstungstürme anstatt Kaltwasser-Aggregat).

In Fig. 7 ist ein zusätzlicher, kleinerer Prozesslüfter 16 vorgesehen, mit welchem etwa 10-30 % der Kaltluft direkt nach dem Verdampfer abgezweigt wird und zur Kühlung des Schaltschranks der Produktionsmaschine bzw. des Förderbands, das die Produkte, die von der Produktionsmaschine erzeugt werden, auf einem Förderband oder dergleichen nachgekühlt bzw. gekühlt werden. Dazu wird bei Bedarf zur Temperaturregelung und zur Vermeidung der Kondensation der Förderleitung oder anderer Bauteile warme Frischluft über eine Klappe (bei Bedarf elektronisch gesteuert) beigemengt. Dadurch wird auch hier die zusätzlich generierte Prozesslufttemperatur steuerbar und kann wesentlich kühler ausgeführt werden als die Hauptprozessluft.

**Tabelle 1: Vergleich Adsorptionstrockneranlage mit erfindungsgemäßer Luftentfeuchtungsanlage**

| Leistungsdaten/Vergleich | Adsorptionstrockner | Erfindungsgemäß |
|---|---|---|
| Prozessluft (m³/h) | 1 900 | 1 500 |
| Energiebedarf Ventilator & Regenration (kW) | 24,4 | 1 |
| Energiebedarf Kälteaggregat (kW) | 0 | 3,6 |
| Kühlwasserbedarf (kcal/h) | 55 000 | 0 |
| Energiebedarf für Kühlwasser (kW/h) | 21,20 | 0 |
| Gesamtenergiebedarf (kW/h) | 45,60 | 4,6 |

## Patentansprüche

1. Vorrichtung (50) zur thermischen Bearbeitung von Kunststoffen, umfassend eine Luftentfeuchtungsanlage (20) und ein thermisch beheizbares Werkzeug (52), welches von einem Werkzeugraum (54) umgeben ist, **dadurch gekennzeichnet, dass** der Luftauslass (14) der Luftentfeuchtungsanlage (20) und der Lufteinlass (12) der Luftentfeuchtungsanlage (20) jeweils mit dem Werkzeugraum (54) verbunden sind, wobei die Luftentfeuchtungsanlage (20) zumindest zwei Wärmetauscher (1, 2, 3, 4) aufweist, welche einen gemeinsamen Kühlmittelkreislauf (10) aufweisen,
wobei der erste Wärmetauscher (1) und der zweite Wärmetauscher (3) hintereinander angeordnet sind, sodass der Lufteinlass (12) am ersten Wärmetauscher (1) angeordnet ist und der Luftauslass (14) nach dem zweiten Wärmetauscher (3) angeordnet ist,
wobei der erste Wärmetauscher (1) einen Verdampfungswärmetauscher aufweist und der zweite Wärmetauscher (3) einen Kondensationswärmetauscher aufweist,
wobei der Kühlmittelkreislauf (10) derart ist, dass der Kühlmittelauslass (1.2) des ersten Wärmetauschers (1) in einen Einlass (6.1) eines Verdichters (6) mündet, wobei der Auslass (6.2) des Verdichters (6) in den Kühlmitteleinlass (3.1) des zweiten Wärmetauschers (3) mündet, wobei der Kühlmittelauslass (3.2) des zweiten Wärmetauschers (3) in den Kühlmitteleinlass (1.1) des ersten Wärmetauschers (1) mündet.

2. Vorrichtung nach Anspruch 1, **dadurch gekennzeichnet, dass** die Vorrichtung (50) zur thermischen Bearbeitung von Kunststoffen ausgewählt ist aus der Gruppe Spritzgießmaschine, (Co-)Extrusionsvorrichtung, Kunststoffplastifiziereinheit, Extrusionsblasvorrichtung, Kunststoffinaschine oder Tiefziehmaschiene.

3. Luftentfeuchtungsanlage (20), umfassend zumindest zwei Wärmetauscher (1, 2, 3, 4), welche einen gemeinsamen Kühlmittelkreislauf (10) aufweisen,
wobei der erste Wärmetauscher (1) und der zweite Wärmetauscher (3) hintereinander angeordnet sind, sodass der Lufteinlass (12) am ersten Wärmetauscher (1) angeordnet ist und der Luftauslass (14) nach dem zweiten Wärmetauscher (3) angeordnet ist,
wobei der erste Wärmetauscher (1) einen Verdampfungswärmetauscher aufweist und der zweite Wärmetauscher (3) einen Kondensationswärmetauscher aufweist,
wobei der Kühlmittelkreislauf (10) derart ist, dass der Kühlmittelauslass (1.2) des ersten Wärmetauschers (1) in einen Einlass (6.1) eines Verdichters (6) mündet, wobei der Auslass (6.2) des Verdichters (6) in den Kühlmitteleinlass (3.1) des zweiten Wärmetauschers (3) mündet, wobei der Kühlmittelauslass (3.2) des zweiten Wärmetauschers (3) in den Kühlmitteleinlass (1.1) des ersten Wärmetauschers (1) mündet.

4. Vorrichtung nach Anspruch 1 oder Anspruch 2 oder Luftentfeuchtungsanlage nach Anspruch 3, **gekennzeichnet durch** einen dritten Wärmetauscher (2) welcher zwischen dem ersten Wärmetauscher (1) und dem zweiten Wärmetauscher (3) angeordnet ist, wobei der dritte Wärmetauscher (2) einen Verdampfungswärmetauscher aufweist, wobei der Kühlmittelkreislauf (10) derart ist, dass der Kühlmittelauslass (2.2) des dritten Wärmetauschers (2) ebenfalls in den Einlass (6.1) des Verdichters (6) mündet.

5. Vorrichtung nach Anspruch 1, 2 oder 4 oder Luftentfeuchtungsanlage nach Anspruch 3 oder Anspruch 4, **gekennzeichnet durch** einen vierten Wärmetauscher (4), wobei der Kühlmittelkreislauf (10) derart ist, dass der Auslass (6.2) des Verdichters (6) in den Kühlmitteleinlass (4.1) des vierten Wärmetauscher (4) mündet, wobei der Kühlmittelauslass (4.2) des vierten Wärmetauschers (4) in den Kühlmitteleinlass (3.1) des zweiten Wärmetauschers (3) mündet, wobei der Kühlmittelauslass (3.2) des zweiten Wärmetauschers (3) in den Kühlmitteleinlass (1.1) des ersten Wärmetauschers (1) und, falls ein dritter Wärmetauscher (2) vorhanden ist, in den Kühlmitteleinlass (2.1) des dritten Wärmetauschers (2) mündet.

6. Vorrichtung nach Anspruch 5 oder Luftentfeuchtungsanlage nach Anspruch 5, **dadurch gekennzeichnet, dass** der vierte Wärmetauscher (4) einen Kondensationswärmetauscher aufweist.

7. Vorrichtung nach Anspruch 5 oder Luftentfeuchtungsanlage nach Anspruch 5, **dadurch gekennzeichnet, dass** der vierte Wärmetauscher (4) einen wassergekühlten Kondensator aufweist.

8. Vorrichtung nach einem der Ansprüche 1, 2 oder 4 bis 7 oder Luftentfeuchtungsanlage nach einem der Ansprüche 3 bis 7, **dadurch gekennzeichnet, dass** vor dem zweiten Wärmetauscher (3) ein Lüfter (16) angeordnet ist.

9. Vorrichtung nach einem der Ansprüche 1, 2 oder 4 bis 8 oder Luftentfeuchtungsanlage nach einem der Ansprüche 3 bis 8, **dadurch gekennzeichnet, dass** nach dem zweiten Wärmetauscher (3) ein Prozessluftlüfter (18) angeordnet ist.
